(19) Europäisches Patentamt
European Patent Office
Office européen des brevets

(11) EP 2 130 866 B1

(12) **EUROPEAN PATENT SPECIFICATION**

(45) Date of publication and mention of the grant of the patent:
**07.03.2012 Bulletin 2012/10**

(21) Application number: **08722766.6**

(22) Date of filing: **25.03.2008**

(51) Int Cl.:
***C08L 25/02*** (2006.01)
***C08L 23/00*** (2006.01)
***C08L 53/02*** (2006.01)
***C08L 23/02*** (2006.01)
***B65D 65/38*** (2006.01)
***C08L 25/06*** (2006.01)
***C08L 71/12*** (2006.01)

(86) International application number:
**PCT/JP2008/055556**

(87) International publication number:
**WO 2008/123240 (16.10.2008 Gazette 2008/42)**

(54) **THERMOPLASTIC COMPOSITION AND MOLDED ARTICLE PRODUCED FROM THE SAME**

THERMOPLASTISCHE ZUSAMMENSETZUNG UND DARAUS HERGESTELLTER FORMKÖRPER

COMPOSITION THERMOPLASTIQUE ET ARTICLE MOULÉ OBTENU À PARTIR CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.03.2007 JP 2007078485**

(43) Date of publication of application:
**09.12.2009 Bulletin 2009/50**

(73) Proprietor: **Asahi Kasei Chemicals Corporation**
**Tokyo 101-8101 (JP)**

(72) Inventors:
- **SASAKI, Shigeru**
  **Tokyo 100-8440 (JP)**
- **NITTA, Katsunori**
  **Tokyo 100-8440 (JP)**

(74) Representative: **Bradley, Josephine Mary**
**D Young & Co LLP**
**120 Holborn**
**London EC1N 2DY (GB)**

(56) References cited:
**WO-A1-03/000788**
**JP-A- 11 012 404**
**JP-A- 11 012 406**
**JP-A- 11 071 466**
**JP-A- 2000 344 974**
**JP-A- 2005 053 969**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 130 866 B1

Printed by Jouve, 75001 PARIS (FR)

## Description

Technical Field

The present invention relates to a thermoplastic resin composition having an excellent tensile elongation property, impact resistance, a tensile modulus property, and resistance to heat aging. More specifically, the present invention relates to a thermoplastic resin composition suitable for a food container and the like, comprising a styrenic resin and/or a polyphenylene ether resin, an olefinic resin, and a partially hydrogenated block copolymer having a specific structure.

Background Art

The styrene resin has good workability and excellent mechanical properties, and, thus, is widely used as a material for injection molding and sheet molding.
However, the range of use of the styrenic resin has been limited because it is inferior in oil resistance and shows a property that, when it comes in contact with oils such as margarine, sesame oil, and the like, its physical property deteriorates rapidly. Therefore, attempts were made to improve the oil resistance by mixing an olefinic resin into the styrene resin.
However, because compatibility of the styrenic resin and olefinic resin is poor, there has been a problem that a mixture thereof turns into a brittle composition which is easy to be separated.
On the other hand, the polyphenylene ether resin has an excellent mechanical property, electrical property, and the like, and are widely used for office equipment housings, various industrial components, and the like.
However, the polyphenylene ether resin is inferior in oil resistance and impact resistance. Therefore, attempts were made to improve the oil resistance and impact resistance by mixing an olefinic resin into the polyphenylene ether resin.
However, compatibility of polyphenylene ether resin and olefin resin is also poor and the mixture thereof turns into a brittle composition which is easy to be exfoliated.
In view of the above-mentioned problems, there have been proposed various compositions to which block copolymers were added.
For example, in the Patent Document 1 mentioned below, there is proposed a composition comprising a polyolefin resin and polystyrene resin, to which was added a hydrogenated block copolymer obtained by hydrogenating a block copolymer containing at least one polymer block A of a vinyl aromatic compound and at least one polymer block B of a conjugated diene, so that at least 70% of the double bonds of the block copolymer are saturated.
Specifically disclosed is a hydrogenated block copolymer obtained by hydrogenating 92 mol% of double bonds of a copolymer, which was an A-B type block copolymer having a bonded styrene content of 50 wt% and a vinyl bond content of 13 mol% before hydrogenation.
Further, in Patent Document 2 mentioned below, a composition comprising a polyolefinic resin and a polystyrenic resin containing a hydrogenated block copolymer is similarly proposed.
Specifically, there is disclosed a hydrogenated block copolymer and the like, obtained by hydrogenating 93 mol% of double bonds of a copolymer, which was an A-B type block copolymer having a bonded styrene content of 35 wt% and a vinyl content before hydrogenation in the isoprene unit of 8 mol%.
However, a drawback of the hydrogenated block copolymers disclosed in the Patent Documents 1 and 2 is that they have high degrees of hydrogenation and are, therefore, poor in productivity.
In addition, with regard to the compositions disclosed in the Patent Documents 1 and 2 mentioned below, improvements have been made to increase compatibility of the polyolefinic resins with the polystyrenic resins. However, there have not yet been obtained sufficient characteristics from a standpoint of mechanical strength such as a tensile elongation property.
Further, the Patent Document 3 mentioned below proposes a technique whereby a hydrogenated block copolymer is added to a composition comprising a polypropylene resin and polyphenylene ether, the hydrogenated block copolymer being obtained by producing a block copolymer having polymer block A of a vinyl aromatic compound and polymer block B of a conjugated diene with a high vinyl bond content of 65 to 75%, followed by preparation of a hydrogenated block copolymer by hydrogenating 65 to 80 mol% of the conjugated diene unit therein.
Specifically, there is disclosed a hydrogenated block copolymer obtained by hydrogenating 68% of double bonds in an A-B type block copolymer having a vinyl aromatic compound content of 60 wt% and a vinyl content before hydrogenation of 74 wt%.
However, because this hydrogenated block copolymer contains a conjugated diene polymer of a high vinyl bond content, there is a problem that there cannot be obtained practically sufficient resistance to heat aging under a high temperature environment.
Furthermore, in Patent Document 4 mentioned below is disclosed a composition comprising a styrenic resin and an olefinic resin, to which was added a hydrogenated block copolymer, which was obtained by hydrogenating 35

mol% to 70 mol% of double bonds derived from conjugated diene compound in the block copolymer.
This composition has excellent heat resistance and resistance to heat aging but, as for characteristics such as a tensile elongation property and properties such as impact resistance, there have not been obtained sufficient characteristics for practical purposes.

Patent Document 1: Japanese Patent Laid-Open No. 56-38338
Patent Document 2: Japanese Patent Laid-Open No. 1-174550
Patent Document 3: Japanese Patent Laid-Open No. 9-12800
Patent Document 4: International Publication No. WO 03/000788

Disclosure of the Invention

Problems to be Solved by the Invention

As mentioned above, each of the heretofore proposed resin compositions has problems related to the physical properties, which have to be solved.
Therefore, a study has been made on a partially hydrogenated block copolymer with a specific structure, which is to be added to a resin comprising a styrenic resin and/or a polyphenylene ether resin, and an olefinic resin, with an object of providing a thermoplastic resin composition which has excellent physical strength such as a tensile elongation property, impact resistance, and a tensile modulus, as well as good resistance to heat aging.

Means for Solving the Problems

With regard to a resin obtained by mixing a styrenic resin and/or a polyphenylene ether resin, and an olefinic resin, the present inventors conducted a study on a composition which has excellent physical strength such as a tensile elongation property, impact resistance, a tensile modulus, as well as excellent resistance to heat aging, and which enables securing productivity that is good enough for practical purposes.
As a result, by containing a block copolymer comprising at least one polymer block X containing a vinyl aromatic compound as a main component and at least one polymer block Y containing a conjugated diene compound as a main component, and by specifying the content of the vinyl aromatic compound in the block copolymer, a vinyl bond content before hydrogenation in the conjugated diene compound, and, further, a degree of hydrogenation of double bonds derived from the conjugated diene compound in this block copolymer, the various properties described above was improved.
In the first aspect of the present invention, there is provided a thermoplastic resin composition comprising a partially hydrogenated block copolymer shown in the following:

(A) 95 to 5 parts by weight of a styrenic resin and/or a polyphenylene ether resin;
(B) 5 to 95 parts by weight of an olefinic resin; and
(C) 1 to 28 parts by weight of a partially hydrogenated block copolymer based on 100 parts by weight of the total weight of the components (A) and (B), wherein the component (C) comprises at least one polymer block X containing a vinyl aromatic compound as a main component and at least one polymer block Y containing a conjugated diene compound as a main component,

a content of the vinyl aromatic compound in the component (C) is 10 wt%or more and less than 50 wt%,
a vinyl bond content before hydrogenation of the conjugated diene compound in the component (C) is 5 wt% or more but less than 35 wt%,
85 mol% or more of the vinyl bond content in the component (C) is hydrogenated, and
1 mol% or more and less than 35 mol% of double bonds derived from the conjugated diene compound in the component (C) are hydrogenated.
5 mol% or more and less than 35 mol% of the double bonds derived from the conjugated diene compound in the component (C) are preferably hydrogenated.
A styrene resins is applicable to the component(A).
A weight average molecular weight of the polymer block X containing the vinyl aromatic compound as the main component being 5,000 to 50,000 is applicable.
A weight average molecular weight of the partially hydrogenated block copolymer of the component (C) being at least 40,000 and at most 200,000 is applicable.
A proportion of the component (C) present on an interface between the component (A) and the component (B) is preferably more than 85% of the total added amount of the component (C).

A peak temperature of tanδ based on the block Y constituting the component (C) is preferably -60˚C or lower.
In the second aspect of the present invention, there is provided a molded article obtained by molding the thermoplastic resin composition defined above. This molded article is for a food container.

Advantages of the Invention

According to the present invention, there is obtained a thermoplastic resin composition and a molded article thereof, having excellent physical strength such as a tensile elongation property, impact resistance, and a tensile modulus, as well as good resistance to heat aging and superior workability.

Best Mode for Carrying Out the Invention

In the following, the best mode for carrying out the present invention (hereinafter referred to as "the present embodiment") will be described in detail. It should be noted that the present invention is not limited to the following embodiments and can be carried out in various modified forms within the scope of the gist thereof.
The thermoplastic resin composition according to the present embodiment comprises a partially hydrogenated block copolymer described below. Namely the composition comprises: (A) 95 to 5 parts by weight of a styrenic resin and/or a polyphenylene ether resin; (B) 5 to 95 parts by weight an olefinic resin; and, (C) 1 to 28 parts by weight of a partially hydrogenated block copolymer based on 100 parts by weight of the total amount of the components (A) and (B).
The component (C) comprises at least one polymer block X containing a vinyl aromatic compound as a main component and at least one polymer block Y containing a conjugated diene compound as a main component.
The content of the vinyl aromatic compound in the component (C) is 10 wt%or more and less than 50 wt%.
The vinyl bond content before hydrogenation of the conjugated diene compound in the block copolymer which constitutes the component (C) is 5 wt% or more but less than 35 wt%.
Of the double bonds derived from the conjugated diene compound in the block copolymer which constitutes the component (C), 1 mol% or more but less than 35 mol% is hydrogenated.
The blend ratio of each component of the thermoplastic resin composition of the present embodiment will be described.
Regarding the blend ratio of the styrenic resin and/or the polyphenylene ether resin (A) and the olefinic resin (B), the weight ratio of (A) to (B) is set in a range of 95:5 to 5:95.
When rigidity is desired to be improved, it is preferable to increase the blend ratio of the component (A) and, when heat resistance and oil resistance are regarded as more important, it is preferable to increase the blend ratio of the component (B). When a balance between rigidity, heat resistance, and oil resistance is considered, the blend ratio of the component A to component B is preferably 80:20 to 40:60 by weight, more preferably 80:20 to 55:45 by weight, most preferably 80: 20 to 60:40 by weight.
The amount of the partially hydrogenated block copolymer (C) to be added is, based on 100 parts by weight of the total amount of the styrenic resin and/or the polyphenylene ether resin (A), and the olefinic resin (B), preferably 1 to 28 parts by weight, more preferably 2 to 15 parts by weight, even more preferably 3 to 12 parts by weight. With the amount being 1 wt% or more, impact resistance, tensile elongation, or flexibility become better, and with the amount being 28 wt% or less, the elastic modulus is improved and is also favorable from an economic standpoint.
The component (A) will be described.
Examples of the styrenic resins may include homopolymers or copolymers of styrene, methylstyrene, ethylstyrene, isopropylstyrene, dimethylstyrene, para-methylstyrene, chlorostyrene, bromostyrene, vinylxylene, and the like; styrene-maleic anhydride copolymers; styrene-acrylic acid copolymers; styrene-acrylic acid ester copolymers; styrene-methacrylic acid copolymers; styrene-acrylonitrile copolymers; acrylonitrile-butadiene-styrene copolymers; and the like.
Further, there may be used impact-resistant polystyrenic resins obtained by blending or graft-polymerizing, to the styrenic resins, rubbers such as a butadiene rubber, a styrene-butadiene rubber, and an ethylene-propylene rubber. Especially, rubber-modified impact-resistant polystyrenes are preferable.
Furthermore, the styrene resins used as the component (A) preferably have melt flow rates (MFR: 200˚C, 5 kg load) of 0.5 to 20 g/10 min, more preferably 1 to 10 g/10 min.
Examples of the polyphenylene ether resins (hereinafter, simply referred to as "PPE") may include polyphenylene ethers shown by the following formula (1):
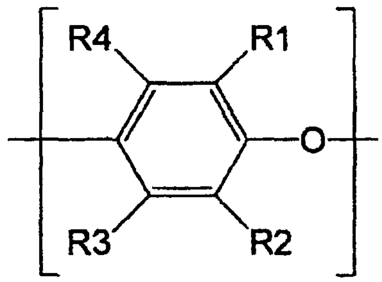

(1)

Note that the formula (1) represents a bond unit, wherein R1, R2, R3, and R4 are each independently selected from the group consisting of hydrogen, halogen, primary or secondary lower alkyl groups having 1 to 7 carbon atoms, a phenyl group, haloalkyl groups, aminoalkyl groups, and hydrocarbyloxy groups or halo-hydrocarbyloxy groups where at least two carbon atoms separate the halogen atom and oxygen atom.

The polyphenylene ethers represented by the formula (1) are homopolymers and/or copolymers having a reduced viscosity (0.5 g/dl, a chloroform solution, 30°C) in a range of from 0.15 to 0.70, more preferably from 0.20 to 0.60.

Examples of the polyphenylene ether resin (PPE) are shown below.

Specific examples thereof may include poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether). Further, specific examples may include polyphenylene ether copolymers such as a copolymer of 2,6-dimethylphenol and other phenols (for example, 2,3,6-trimethylphenol and 2-methyl-6-butylphenol). Among these PPEs, poly(2,6-dimethyl-1,4-phenylene ether) is especially preferable.

The PPEs can be synthesized by the known methods.

For example, U.S. Patent No. 3306874 discloses an example where a complex of cuprous chloride and amines according to Hay is used as a catalyst to manufacture PPE by oxidative polymerization of 2,6-xylenol, for example. Also, in Japanese Patent Laid-Open No. 63-152628, there is disclosed a manufacturing method.

Further, in addition to the various PPEs described above, there may be used a modified PPE, which can be obtained by reacting PPE with α,β-unsaturated carboxylic acids or derivatives thereof in the presence or absence of radical generators in a molten state, a solution state, or a slurry state at a temperature of from 80 to 350°C. Furthermore, a blend of the PPE and modified PPE may be used similarly.

As the component (A), styrenic resins, especially polystyrene and impact-resistant polystyrene are preferable, from standpoints of economic efficiency, and compatibility and moldability of the ultimately desired thermoplastic resin composition,

Next, the component (B) will be described.

The olefinic resins, the component (B), are not particularly limited as long as they are the resins obtained by polymerizing α-olefins, for example, ethylene, propylene, 1-butene, isobutylene, and 4-methyl-1-pentene.

When the olefinic resin is a copolymer, it can be either a random copolymer or a block copolymer, and may contain a copolymer rubber obtained by combining two, three, or more kinds of α-olefins and an olefinic thermoplastic elastomer such as a copolymer of an α-olefin and other monomers.

The copolymer rubbers may include, for example, an ethylene-propylene copolymer rubber (EPR), an ethylene-butene copolymer rubber (EBR), an ethylene-octene copolymer rubber (EOR), and an ethylene-propylene-diene copolymer rubber (EPDM).

As the olefin resin used as the component (B), a homo- or block-polypropylene is especially preferable. Especially preferable is a syndiotactic polypropylene homopolymer or a propylene-ethylene block copolymer having a peak temperature of crystal melting of 155°C or higher as measured by DSC (differential scanning calorimeter). When these resins are used, there is obtained an effect of improving heat resistance of the ultimately obtained thermoplastic resin composition.

The olefin resins of the component (B) preferably have melt flow rates (MFR: 230°C, 2.16 kg load) of from 0.5 to 100 g/10 min, more preferably from 1 to 60 g/10 min, even more preferably from 1 to 20 g/10 min. This is so because, if the melt flow rate is less than 0.5 g/10 min, enough moldability of the ultimately desired thermoplastic resin composition cannot be obtained, and, if the melt flow rate is more than 60 g/10 min, there occurs a problem that impact resistance deteriorates.

Next, the component (C) will be described.

As described above, the component (C) comprises at least one polymer block X containing a vinyl aromatic compound as a main component and at least one polymer block Y containing a conjugated diene compound as a main component. The content of the vinyl aromatic compound in the component (C) is 10 wt% or more and less than 50 wt%.

The vinyl bond content before hydrogenation of the conjugated diene compound in the block copolymer which constitutes the component (C) is 5 wt% or more but less than 35 wt%.
Of the double bonds derived from the conjugated diene compound in the block copolymer which constitutes the component (C), 1 mol% or more but less than 35 mol% is hydrogenated. Note that the term "main component" means that the monomer unit is contained in the copolymer in an amount of 60% by mass or more, preferably 80% by mass or more, more preferably 90% by mass or more, even more preferably 95% by weight or more.

As the vinyl aromatic compounds which constitute the polymer block X, the following compounds can be used. Examples thereof may include styrene; alkyl styrenes such as α-methylstyrene, p-methylstyrene, and p-tert-butylstyrene; p-methoxystyrene; vinylnaphthalene; 1,1-diphenylethylene; and divinylbenzene. These may be used individually or in a combination of two or more kinds. Especially, styrene is advantageous in terms of cost and is suitable.
As the conjugated diene compounds which constitute the polymer block Y, the following compounds can be used. Examples thereof may include butadiene, isoprene, piperylene, methylpentadiene, phenylbutadiene, 3,4-dimethyl-1,3-hexadiene, and 4,5-diethyl-1,3-octadiene. These may be used individually or in a combination of two or more kinds. Especially, butadiene and/or isoprene are preferable and, from a viewpoint of impact resistance, butadiene is more preferable.

The structure of the partially hydrogenated block copolymer, the component (C), is not particularly limited. Examples of the structure thereof may include (X-Y)m-X and (X-Y)m-K.
The "X" represents a polymer block having a vinyl aromatic compound as a main component.
The "Y" represents a partially hydrogenated polymer block having a conjugated diene compound as a main component. When there are a plurality of polymer blocks, X and Y, in the copolymer, the structure such as the molecular weight, composition, and the like of each block may the same or different.
The "m" is an integer of at least 1 and at most 6.
The "K" represents a residue of a coupling agent or a residue of a multifunctional initiator.
The boundary and farthest portion of each polymer block cannot necessarily be distinguished clearly and may be in the form of a tapered pattern or a staircase pattern.

Distribution of the vinyl aromatic compound in the polymer blocks X and Y is not particularly limited as long as the content of the vinyl aromatic compound falls within the aforementioned range. The distribution may be even, tapered, staircase, convex, or concave.
Further, there may be a plurality of segments having different contents of the vinyl aromatic compound.
Furthermore, there may be a crystalline portion in the polymer block Y.
Among the aforementioned structures, one having two or more X is preferable from a standpoint of impact resistance, the X-Y-X structure being especially preferable.

In the conjugated diene compounds, the state of distribution of the double bonds, which are not hydrogenated, is not particularly limited.

The method for hydrogenating the conjugated diene compound will be described.
For example, there may be mentioned a method whereby hydrogen is supplied in the presence of a specified hydrogenation catalyst and hydrogenate the unsaturated portion.
The hydrogenation catalysts are not particularly limited. Examples thereof may include (1) supported heterogeneous hydrogenation catalysts comprising metals such as Ni, Pt, Pd, and Ru supported on carbon, silica, alumina, and diatomaceous earth, (2) the so-called Ziegler-type hydrogenation catalysts which use transition metal salts such as organic acid salts or acetylacetonate salts of Ni, Co, Fe, Cr, and the like and reducing agents such as organoaluminum compounds, (3) homogeneous hydrogenation catalysts such as the so-called organometallic complexes including organometallic compounds of Ti, Ru, Rh, and Zr.
Specifically, there may be used hydrogenation catalysts described in Japanese Patent Publication Nos. 42-8704, 43-6636, 63-4841, 1-37970, 1-53851, 2-9041, and the like.

The partially hydrogenated block copolymer, the component (C), may have a polar group-containing atomic group.
Examples of the polar groups may include a hydroxy group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphoric acid group, a phosphoric acid ester group, an amino group, an imino group, a nitrile group, a pyridyl group, a quinoline group, an epoxy group, a thioepoxy group, a sulfide group, an isocyanate group, an isothiocyanate group, a silicon halide group, an alkoxy silicon group, a tin halide group, a boric acid group, a boron-containing group, a boronate group, an alkoxy tin group, and a phenyl tin group.

The position of the polar group-containing atomic group in the partially hydrogenated block copolymer is not particularly limited. It may be in the molecular chain or at the molecular terminal, or it may be grafted.

The method for manufacturing the partially hydrogenated block copolymer, the component (C), is not particularly limited, but the following methods may be applied.

For example, a method (primary modification) can be mentioned whereby, after polymerization using a polymerization initiator which has a specified functional group and an unsaturated monomer having a functional group, the polymer is hydrogenated.
Further, for example, a method described in Japanese Patent Publication No. 4-39495 (U.S. Patent No. 5,115,035) may be applied, whereby a modifying agent (a compound which forms or contains a functional group-containing atomic group) is addition-reacted to a living terminal of a polymer obtained by using an organo-alkali metal compound as a polymerization catalyst and, thereafter, the polymer is hydrogenated.
Also, a method may be applied whereby a block copolymer is reacted with an organo-alkali metal compound (a metalation reaction) and, further, with a modifying agent, and thereafter hydrogenated.
Further, there may be applied a method whereby a copolymer is first hydrogenated, then subjected to a metalation reaction, and thereafter reacted with a modifying agent.

Depending on the kinds of the modifying agents, the hydroxy group, amino group, and other groups thereof may be in a form of organometal salt at the stage of reaction. In such a case, they may be treated with a compound having an active hydrogen such as water and alcohol to be converted back to the hydroxy group, amino group, and the like.
Also, the functional group of the modifying agent may have been bonded with a protecting group, which may be deprotected during or after hydrogenation.

Further, there may be applied a method (secondary modification) whereby an unmodified partially hydrogenated block copolymer or a primarily modified partially hydrogenated block copolymer prepared as described above is reacted with a compound having a specified functional group.

In the partially hydrogenated block copolymer, the component (C), the content of the vinyl aromatic compound is 10 wt% or more but less than 50 wt%, more preferably 20 wt% or more but less than 50 wt%, most preferably 35 wt% or more but less than 50 wt%.
When the content of the vinyl aromatic compound is 10 wt% or more, affinity of the block copolymer with the styrenic resin and/or PPE (component A) is improved so that the amount of the block copolymer present on the interface between the A component phase and B component phase become sufficient, resulting in an improved compatibilizing effect. On the other hand, with the content of the vinyl aromatic compound being 80 wt% or less, flexibility is obtained and affinity of the block copolymer with the A component does not become excessive and thus the block copolymer is not easily incorporated into the A component phase. Thus, a sufficient compatibilizing effect can be obtained.
Also, with the content of the vinyl aromatic compound being 10 wt% or more but less than 50 wt%, it was confirmed that an excellent compatibilizing effect could be obtained.

The vinyl bond content before hydrogenation in the conjugated diene compound in the partially hydrogenated block copolymer, the component (C), is 5 wt% or more and less than 35 wt%, and preferably at least 10 wt% and at most 30 wt%.
Note that the "vinyl bond content" refers to the proportion, before hydrogenation, of the conjugated dienes incorporated into the block copolymer with 1,2-bond and 3,4-bond to those incorporated with the binding modes of 1,2-bond, 3,4-bond, and 1,4-bond.
When the vinyl bond content is 3 wt% or more, sufficient flexibility is obtained in the ultimately desired resin composition. Also, when the vinyl bond content is less than 50 wt%, practically sufficient characteristics are obtained in terms of heat resistance and rigidity. Moreover, affinity with the component (B) does not become excessive and thus the block copolymer is not easily incorporated into the component B phase, and a sufficient amount of the block copolymer present on the interface between the A component phase and B component phase can be secured. Thus, practically sufficient impact resistance can be obtained.

Of the double bonds derived from the conjugated diene compound in the partially hydrogenated block copolymer, the component (C), 1 mol% or more but less than 35 mol% are hydrogenated.
The degree of hydrogenation is preferably 5 mol% or more but less than 35 mol%, more preferably 10 mol% or more but less than 35 mol%, most preferably 15 mol% or more but less than 35 mol%.
When the degree of hydrogenation of the double bonds derived from the conjugated diene compound unit in the partially hydrogenated block copolymer, the component (C), is 1 mol% or more, excellent resistance to heat aging and impact resistance can be secured. Also, when the degree of hydrogenation is less than 40 mol%, excellent workability, tensile elongation, impact resistance, and copolymer manufacturability are obtained.

It should be noted that the degree of hydrogenation of the vinyl bond content in the partially hydrogenated block copolymer, the component (C), is 85 mol% or more, and, further, preferably 87 mol % or more.
Herein, the "degree of hydrogenation of the vinyl bond content" refers to the degree of hydrogenation when the vinyl bond content is set to 100.
By making the degree of hydrogenation of the vinyl bond content in the partially hydrogenated block copolymer, the component (C), be 85 mol% or more, it was confirmed that superior heat resistance and resistance to heat aging could be obtained in the ultimately desired thermoplastic resin composition.

When, of the double bonds derived from the conjugated diene in the partially hydrogenated block copolymer,

the component (C), the proportion of those hydrogenated is denoted as H (mol%) and the proportion of the vinyl content in the conjugated diene unit is denoted as V (mol), it is preferable that the conditions, 0.9<(H/V) and (H/V) <1.6 be satisfied. If (H/V) exceeds 0.9, excellent resistance to heat aging and impact resistance are obtained.
Further, if (H/V) is less than 1.6, impact resistance and workability become excellent.

The weight average molecular weight of the partially hydrogenated block copolymer (C), the component (C), is preferably at least 40,000 and at most 200,000, more preferably at least 50,000 and at most 150,000, even more preferably at least 60,000 and at most 90,000.
When the weight average molecular weight is 40,000 or more, impact resistance becomes excellent and, when the same is 200,000 or less, workability becomes excellent.

Note that the "weight average molecular weight" can be obtained by use of gel permeation chromatography (GPC) by polystyrene conversion.

The weight average molecular weight of the polymer block X which contains a vinyl aromatic compound as a main component and constitutes the partially hydrogenated block copolymer, the component (C), is preferably 5,000 to 50,000.
On the other hand, the weight average molecular weight of the polymer block Y which contains a conjugated diene compound as a main component is preferably 5,000 to 70,000.
If the molecular weight of the polymer block X is 5,000 or more, affinity with the component (A) is improved.
Also, if the molecular weight of the polymer block Y is 5,000 or more, affinity with the component (B) is improved and good compatibilizing effect is obtained.
Further, when the molecular weight of the polymer block X is 50,000 or less and the molecular weight of the polymer block Y is 70,000 or less, workability becomes excellent and dispersibility of the copolymer in a resin composition comprising the components (A) and (B) is improved and excellent compatibility is obtained.

The melt flow rate (MFR: 230˚C, 2.16 kg load) of the partially hydrogenated block copolymer, the component (C), is preferably 0.1 g to 100 g/10 min, more preferably 0.3 g to 50 g/10 min, even more preferably 0.5 g to 20 g/10 min, most preferably 1 g to 10 g/10 min.
If the melt flow rate is 0.1 g/10 min or more, the workability and compatibilizing effect are improved.
On the other hand, if the melt flow rate is 100 g/10 min or less, a reinforcement effect of the boundary between the components A and B is obtained and the impact resistance of the resin composition is improved.

The peak temperature of tanδ based on the polymer block Y, which constitutes the component (C) and contains a conjugated diene compound as a main component, is preferably -60˚C or lower, more preferably -64˚C or lower, even more preferably -66˚C or lower.
When the peak temperature is -60˚C or lower, excellent impact resistance is obtained in the ultimately desired resin composition.
Note that the tanδ peak is a value obtained by setting a sample cut in a size of 10 mm width and 35 mm length on an instrument ARES (manufactured by TA Instruments, trade name) in a torsion type geometry and carrying out the measurement with an effective measurement length of 25 mm, a strain of 0.5%, a frequency of 1 Hz, and a temperature-raising rate of 3˚C/min from -100˚C to 50˚C.
The peak temperature of tanδ can be obtained by carrying out an automated measurement using RSI Orchestrator (manufactured by TA Instruments, trade name).

It is preferable that the component (C) is present in a large amount on the interface between the components (A) and (B) and the proportion of such component (C) based on the total amount added thereof is preferably more than 85%. Herewith, it becomes possible to obtain excellent impact resistance and tensile elongation characteristics in the desired thermoplastic resin composition.
Note that the proportion of the component (C) present on the interface can be obtained by the following method.
Namely, an ultrathin slice of a surface parallel to the direction of resin flow at the time of molding is cut by an ultramicrotome from an injection-molded article of the thermoplastic resin composition. This is stained with ruthenium tetroxide and its image of 10,000 times magnification is photographed by a transmission electron microscope. Subsequently, an image analysis of this photograph is carried out. When the area ratio (CA) of the component (C) present in the component (A) phase and component (B) phase as seen in the image photograph is measured and the blend ratio of the component (C) in the thermoplastic resin composition is denoted as CB, the ratio of presence of the component (C) on the interface can be obtained as ((CB)-(CA))/(CB)$\times$100%.

Next, methods for producing the partially hydrogenated block copolymer, the component (C), will be described. The methods are not particularly limited and known methods may be applied.
For example, a block copolymer may be produced by polymerizing a vinyl aromatic compound and a conjugated diene compound in an inert solvent, according to a technique of living anion polymerization using an organolithium catalyst, as described in Japanese Patent Publication No. 36-19286.
Specific examples of the organolithium catalyst may include monolithium compounds such as n-butyllithium, sec-butyllithium, and tert-butyllithium. The polymerization methods may include a method whereby a block copolymer is formed

by successive polymerization in an order of X, Y, and X; a method whereby a triblock copolymer having a structure of X-Y-X is formed by reacting a bifunctional coupling agent after forming an X-Y type living block copolymer in the order of X-Y; a method whereby a triblock copolymer having an X-Y-X structure is formed by using a dilithium compound and polymerizing in the order of X and Y; and the like. In obtaining a block copolymer, the content of a vinyl aromatic compound can be adjusted by a feed monomer composition of the vinyl aromatic compound and conjugated diene compound.
Also, the vinyl bond content derived from the conjugated diene compound can be adjusted by using a vinyl content regulator. The vinyl content regulators may include amines such as N,N,N',N'-tetramethylethylenediamine, trimethylamine, triethylamine, and diazabicyclo[2,2,2]octane; ethers such as tetrahydrofuran, diethylene glycol dimethyl ether, and diethylene glycol dibutyl ether; thioethers; phosphines; phosphoramides; alkylbenzenesulfonate salt; alkoxides of potassium and sodium; and the like.

By subjecting the block copolymer prepared by the aforementioned methods to a hydrogenation reaction according to the known method, there is obtained the desired partially hydrogenated block copolymer.
Specifically, after adding a target amount of hydrogen in the presence of a hydrogenation catalyst in a predetermined inert solvent, a solution of a partially hydrogenated block copolymer is obtained.

From the solution of the partially hydrogenated block copolymer obtained as describe above, the desired partially hydrogenated block copolymer is obtained by subjecting the solution to a solvent removal treatment according to the known method. Note that depending on needs, it may be subjected to a deashing treatment to remove metals. Further, if required, a reaction terminator, antioxidant, neutralizing agent, surfactant, and the like may be appropriately used.

To the thermoplastic resin composition of the present embodiment, there may be added any additives, if needed. The additives are not limited as long as they are the ones which are generally blended into the resins. Examples of the additives may include inorganic fillers such as silica, calcium carbonate, magnesium carbonate, calcium sulfate, and talc; organic fibers; pigments such as titanium oxide, carbon black, and iron oxide; lubricants such as stearic acid, behenic acid, zinc stearate, calcium stearate, magnesium stearate, and ethylene bis(stearamide); mold-releasing agents; plasticizers such as organic polysiloxane and mineral oil; hindered phenol- and phosphorus-based antioxidants; flame retardants; ultraviolet absorbers; antistatic agents; reinforcing agents such as glass fibers, carbon fibers, and metal whiskers. These may be used individually or in combinations.
Furthermore, a hydrogenated copolymer of a vinyl aromatic compound and a conjugated diene compound, wherein 75 mol% or more of the double bond derived from the conjugated diene compound is hydrogenated, may be added in a small amount, corresponding to 10% or less of the ultimately obtained thermoplastic resin composition.

In the production process of a thermoplastic resin composition of the present embodiment, conventionally known means can be utilized.
For example, there may be used a melting and kneading method using commonly used mixers such as a Banbury mixer, a singe-screw extruder, a twin-screw extruder, a co-kneader, and a multiple-screw extruder, and a method whereby each component is dissolved or dispersion mixed and, thereafter, the solvent is removed by heating.
Preferably, means is selected whereby a styrenic resin or a polyphenylene ether resin (A), an olefinic resin (B), and a partially hydrogenated block copolymer (C) are dissolved and mixed sufficiently, and kneaded under a condition for the partially hydrogenated block copolymer (C) to migrate to the interface between the phase (A) and phase (B), namely, at a temperature of 180˚C or higher, preferably 200˚C or higher, and at a shear rate of 100/sec. Especially, a method to use a twin-screw extruder is preferable.
Also, it is one embodiment of preferred molding methods to produce a master pellet by kneading the resins once by the above-mentioned methods and, by using the pellet, to carry out molding or, if required, foam molding.

By carrying out processing using a thermoplastic resin composition of the present embodiment, resin molded articles of desired shapes can be produced.
In the processing, heretofore known molding methods may be applied. For example, the thermoplastic resin composition can be easily fabricated into a very wide variety of practically useful products such as sheets, foams, films, and injection molded-, blow molded-, pressure molded-, vacuum molded-, vacuum/pressure molded-, heat formed-, and rotational molded-articles of various shapes, by means of extrusion, injection molding, blow molding, rotational molding, chemical foaming, physical foaming, and the like.
Especially, the molded articles obtained from the thermoplastic resin composition of the present embodiment are suitable for food containers because of excellent physical strength characteristics, resistance to heat aging, as well as safety.

## Examples

Hereinafter, the present embodiment will be described in more detail by means of Examples and Comparative Examples, but the present embodiment is not limited to these.

(1) Components to be used and production thereof

Component (A): Styrenic resin and/or polyphenylene ether resin

(A-1): Styrenic resin

A commercially available impact-resistant polystyrene resin: 475D (manufactured by A & M Styrene Co. Ltd., trade name)

(A-2): Polyphenylene ether resin

A polymer of 2,6-xylenol: number average molecular weight in terms of polystyrene = 21,000

Component (B): Olefinic resin

Commercially available homo-polypropylene resin: PL500A (manufactured by Montel SDK Sunrise Corp., trade name)

Component (C): Block copolymer

(Polymers 1, 2, and 3)

An autoclave having an inner volume of 100 (L) equipped with a stirrer and a jacket was washed and dried, and the inside atmosphere was replaced with nitrogen. To this was charged a cyclohexane solution containing 20 parts by weight of styrene which had been purified beforehand.
Then, n-butyllithium and tetramethylethylenediamine were added thereto and polymerization was carried out at 70˚C for 1 hour. Thereafter, a cyclohexane solution containing 60 parts by weight of butadiene purified beforehand was added and polymerization was carried out for 1 hour. Further, a cyclohexane solution containing 20 parts by weight of styrene was added, followed by polymerization for 1 hour.
A portion of the solution of a block copolymer obtained was sampled, to which was added 0.3 part by weight of octadecyl 3-(3,5-di-t-butyl-4-hydroxyphenyl)propionate based on 100 parts by weight of the block copolymer and, thereafter, the solvent was removed by heating (the copolymer obtained is denoted as "Polymer 1").
Polymer 1 had a styrene content of 40 wt%, 1,2-vinyl bond content in the polybutadiene unit of 14 wt%, and a weight average molecular weight of 67,000.
Note that the styrene content and vinyl bond content were measured using NMR as described in the following (2-1). The number average molecular weight was measured by use of gel permeation chromatography (GPC), as described in the following (2-3).
Next, using the remaining block copolymer solution, hydrogenation was carried out at 70˚C with di-p-trisbis(1-cyclopentadienyl)titanium and n-butyllithium as a hydrogenation catalyst. A portion of the polymer solution was sampled to obtain "Polymer 2". The degree of hydrogenation of Polymer 2 was 21% with the time required after start of the hydrogenation being 20 minutes. Note that the degree of hydrogenation was measured by using a nuclear magnetic resonance apparatus (NMR). Also, the degree of hydrogenation was controlled by measuring the amount of hydrogen gas supplied by a flow meter and stopping the gas supply when a desired degree of hydrogenation was attained.
The remaining polymer solution was subjected to hydrogenation again to obtain a copolymer, "Polymer 3". The degree of hydrogenation of Polymer 3 was 33% with the time required after start of the hydrogenation being 28 minutes.
From the respective solutions of the copolymer, the solvent was removed by heating after addition of a stabilizer as in the preparation of Polymer 1 to prepare various Polymers (2 and 3). The polymer structure of each sample is shown in Table 1.

(Polymers 4, 5, and 6)

Except that the amount of styrene charged and amounts of n-butyllithium and tetramethylethylenediamine added were changed, a block copolymer was obtained in the same manner as in the preparation of Polymer 1. The polymer obtained had a styrene content of 47 wt%, 1,2-vinyl bond content in the polybutadiene unit of 23 wt%, and a number average molecular weight of 74,000 (denoted as "Polymer 4").
The remaining block copolymer solution was subjected to hydrogenation again to obtain copolymer solutions of "Polymer 5" and "Polymer 6".
The degree of hydrogenation of Polymer 5 was 27% and the time required after start of the hydrogenation was 25 minutes.

Also, Polymer 6 had a degree of hydrogenation of 34% and the time required after start of the hydrogenation was 30 minutes.
From the respective solutions of the copolymer, the solvent was removed by heating after addition of a stabilizer as in the preparation of Polymer 1 to prepare various Polymers (5 and 6). The polymer structure of each sample is shown in Table 1.

(Polymers 7 and 8)

An autoclave having an inner volume of 100 (L) equipped with a stirrer and a jacket was washed and dried, and the inside atmosphere was replaced with nitrogen. To this was charged a cyclohexane solution containing 23.5 parts by weight of styrene which had been purified beforehand.
Then, n-butyllithium and tetramethylethylenediamine were added thereto and polymerization was carried out at 70˚C for 1 hour. Thereafter, a cyclohexane solution containing 53 parts by weight of isoprene purified beforehand was added and polymerization was carried out for 1 hour. Further, a cyclohexane solution containing 23.5 parts by weight of styrene was added and polymerization carried out for 1 hour.
A portion of the solution of a block copolymer obtained was sampled, to which was added 0.3 part by weight of octadecyl 3-(3,5-di-t-butyl-4-hydroxyphenyl)propionate based on 100 parts by weight of the block copolymer and, thereafter, the solvent was removed by heating (the copolymer obtained is denoted as "Polymer 7"). Polymer 7 had a styrene content of 47 wt%, a total vinyl bond content in the polyisoprene unit of 20 wt%, and a weight average molecular weight of 72,000.
Next, using the remaining block copolymer solution, hydrogenation was carried out at 70˚C with di-p-trisbis(1-cyclopentadienyl)titanium and dibutylmagnesium as a hydrogenation catalyst to obtain "Polymer 8". The degree of hydrogenation of Polymer 8 was 34%.
From the copolymer solution, the solvent was removed by heating after addition of a stabilizer as in the preparation of Polymer 1 to prepare Polymer 8. The polymer structure of each sample is shown in Table 1.

(Polymer 9)

Except that the amount of styrene charged and amounts of n-butyllithium and tetramethylethylenediamine added were changed, a block copolymer was obtained in the same manner as in the preparation of Polymer 1. The polymer obtained had a styrene content of 43 wt%, a 1,2-vinyl bond content in the polybutadiene unit of 73 wt%, and a number average molecular weight of 71,000.
Further, using the block copolymer solution, hydrogenation was carried out in the same manner as in the preparation of Polymer 2 to prepare "Polymer 9" with a degree of hydrogenation of 63%. The polymer structure is shown in Table 1.

(Polymers 10 to 15)

Except that the amount of styrene charged and amounts of n-butyllithium, tetramethylethylenediamine, and butadiene were changed, a block copolymer having a polystyrene-polybutadiene-polystyrene structure was obtained in the same manner as in the preparation of Polymers 1 to 6 and Polymer 9.
According to necessity, hydrogenation was carried out in the similar manner. The polymer structure of each sample is shown in Table 1.

(2) Evaluation of the composition and structure of the block copolymer

(2-1) Styrene content, vinyl bond content in the conjugated diene unit, and degree of hydrogenation of the double bond derived from the conjugated diene

The amounts of the styrene unit, and 1,4-bond, 1,2-bond, ethylene, and butylene units derived from butadiene in the polymer were measured by nuclear magnetic resonance spectral analysis (NMR) according to the following conditions.
Measuring instrument: JNM-LA400 (manufactured by JEOL Ltd.)
Solvent: deuterated chloroform
Measurement samples: samples taken before and after hydrogenation of the polymer
Sample concentration: 50 mg/mL
Measurement frequency: 400 MHz
Chemical shift standard: TMS (tetramethylsilane)
Pulse delay: 2.904 sec
Number of scans: 64 times

Pulse width: 45˚
Measurement temperature: 26˚C

(2-2) Content of the polymer block containing a styrene block vinyl aromatic monomer as a main component

This was measured by the osmium tetroxide oxidation method which is described in I. M. Kolthoff, et al., J. Polym. Sci., 1, 429 (1946).
Measurement samples: samples taken before hydrogenation of the polymer
Solution for decomposition of the polymer: a solution of 0.1 g of osmic acid in 125 mL of tert-butanol

(2-3) Weight average molecular weight, number average molecular weight, and molecular weight distribution

The weight average molecular weight, number average molecular weight, and molecular weight distribution (weight average molecular weight / number average molecular weight) of the copolymer (A) were measured by gel permeation chromatography (GPC) according to the following conditions.
Measuring instrument: LC-10 (manufactured by Shimadzu Corporation)
Column: TSK gel GMHXL (4.6 mm ID × 30 cm), 2 columns
Solvent: Tetrahydrofuran
Sample for a calibration curve: Commercially available standard polystyrene (manufactured by Tosoh Corporation), 10-point measurement
The molecular weight distribution was obtained by calculating the ratio of the weight average molecular weight obtained to the number average molecular weight obtained.
[Table 1]

| Polymer number | Structure of block copolymer | | | | | |
|---|---|---|---|---|---|---|
| | Component X <note 1> (wt%) | Component Y <note 2> (wt%) | Vinyl bond content of conjugated diene compound unit before *hydrogenation* (wt%) | Degree of hydrogenation of double bond derived from conjugated diene compound (mol%) | Degree of hydrogenation of vinyl bond content (mol%) | Weight average molecular weight/ molecular weight distribution (before hydrogenation) |
| 1* | 40 | 60 | 14 | 0 | 0 | 67,000/1.1 |
| 2 | 40 | 60 | 14 | 21 | 87 | 67,000/1.1 |
| 3 | 40 | 60 | 14 | 33 | 95 | 67,000/1.1 |
| 4* | 47 | 53 | 23 | 0 | 0 | 74,000/1.1 |
| 5 | 47 | 53 | 23 | 27 | 89 | 74,000/1.1 |
| 6 | 47 | 53 | 23 | 34 | 92 | 74,000/1.1 |
| 7* | 47 | 53 | 20 | 0 | 0 | 72,000/1.1 |
| 8 | 47 | 53 | 20 | 34 | 94 | 72,000/1.1 |
| 9* | 43 | 57 | 73 | 63 | 81 | 71,000/1.1 |
| 10 | 66 | 34 | 23 | 33 | 91 | 67,000/1.1 |
| 11* | 66 | 34 | 50 | 26 | 68 | 69,000/1.1 |
| 12* | 66 | 34 | 50 | 44 | 83 | 69,000/1.1 |
| 13 | 47 | 53 | 28 | 34 | 88 | 67,000/1.1 |
| 14* | 47 | 53 | 23 | 45 | 92 | 67,000/1.1 |

(continued)

| Polymer number | Structure of block copolymer | | | | | |
|---|---|---|---|---|---|---|
| | Component X <note 1> (wt%) | Component Y <note 2> (wt%) | Vinyl bond content of conjugated diene compound unit before *hydrogenation* (wt%) | Degree of hydrogenation of double bond derived from conjugated diene compound (mol%) | Degree of hydrogenation of vinyl bond content (mol%) | Weight average molecular weight/ molecular weight distribution (before hydrogenation) |
| 15* | 60 | 56 | 35 | 56 | 93 | 67,000/1.1 |
| <Note 1> Polystyrene block<br><Note 2> Polybutadiene block or polyisoprene block<br>* not according to the invention | | | | | | |

(3) Preparation of resin composition

In the following Examples 1 to 8 and 10, the respective components (A), (B), and (C) were blended in ratios shown in the following Table 2. The resins were then melted and kneaded at 200˚C using a 30 mm twin-screw extruder and pelletized.
Note that the measurement standards and test methods for the physical properties shown in Examples and Comparative Examples are as follows. The obtained pellets were formed into a 0.4 mm-thick sheet by a 40 mm sheet extruder at 200˚C and various characteristics shown in the following 1 to 4 were measured.
In Example 9, the respective components (A), (B), and (C) were blended in a ratio shown in the following Table 2. The resins were then melted and kneaded at 270˚C using a 30 mm twin-screw extruder and pelletized.
Note that the measurement standards and test methods of the physical properties shown in Examples are as follows. The obtained pellets were formed into a 0.4 mm thick sheet by a 40 mm sheet extruder at 270˚C and various characteristics shown in the following (4-1) to (4-4) were evaluated.

(4) Evaluation of resin composition

(4-1) Tensile elongation property: tensile elongation at break of a sheet-molded test piece was measured according to ASTM D638. Note that the tensile speed was 10 mm/min.
(4-2) Rigidity: tensile modulus was measured by carrying out a tensile test of a sheet molded test piece according to ASTM D638. Note that the tensile speed was 10 mm/min.
(4-3) Dart impact strength: dart impact strength was measured by carrying out the dart impact test with a sheet molded test specimen at 23˚C according to ASTM D1709, after determining the best condition using a falling weight of 1/2 inch radius, which is dropped from a height of 80 cm to 120 cm.
(4-4) Heat aging resistance: When the resin composition was sheet-extruded, the composition was made to reside in the extrusion machine at a temperature of 245˚C for 10 minutes. Thereafter, the composition was sheet-extruded and the surface condition of the sheet was visually judged. The way the formed sheet comes out of the extruder and the surface roughness thereof were evaluated by the following three ranks:

○ (no heat aging) < △ (slight heat aging) < × (heat aging).

With regard to the characteristics of the resin compositions in Examples 1 to 10 and Comparative Examples 1 to 9, the evaluation results are shown in Table 2.

[Examples 1 to 10]

In the thermoplastic resin composition obtained by blending 95 to 5 parts by weight of a styrenic resin and/or a polyphenylene ether resin (component (A)), 5 to 95 parts by weight of an olefinic resin (component (B)), and, 1 to 28 parts by weight of a partially hydrogenated block copolymer (component (C)) based on 100 parts by weight of the total amount of the components (A) and (B), when the component (C) had a polymer block X having a vinyl aromatic compound as a main component and a polymer block Y having conjugated diene compound as a major component, the content of a vinyl aromatic compound in the component (C) was at least 10 wt% and at most 80 wt%, the vinyl bond content before hydrogenation in the conjugated diene compound in the block copolymer, which constituted the component (C), was at least 3 wt% but was less than 50 wt%, and, 1 mol% or more but less than 40 mol% of the double bonds derived from the conjugated diene compound in a block copolymer, which constituted the component (C), was hydrogenated, there were obtained thermoplastic resin compositions with excellent physical characteristics such as a tensile elongation property, a dart impact strength property, and a tensile modulus, as well as good characteristics with regard to resistance to heat aging.

[Comparative Example 1]

This was an example of a resin composition comprising 63 parts by weight of impact-resistant polystyrene (A) and 37 parts by weight of polypropylene (B), without addition of the partially hydrogenated block copolymer (C).
The composition showed poor compatibility and extremely inferior tensile elongation and dart impact strength properties. Also, resistance to heat aging could not be evaluated as acceptable for practical purposes, either.

[Comparative Examples 2 to 7]

These were examples of resin compositions comprising 63 parts by weight of impact-resistant polystyrene (A) and 37 parts by weight of polypropylene (B), to which styrenic block copolymers (C) were added.
However, Polymers 1, 4, 7, 9, 11, and 12 which constituted the block copolymers, component (C), did not have structures specified by the present invention. Therefore, in the respective Comparative Examples, characteristics such as tensile elongation property, dart impact strength property, and tensile modulus lacked a good balance for practical purposes, and, further, resistance to heat aging was extremely poor.

[Comparative Examples 8 and 9]

In these Comparative Examples, the degree of hydrogenation of the double bonds in the conjugated diene compound which constituted the partially hydrogenated block copolymer was too high. Thus, the resin compositions could not be evaluated as acceptable for practical purposes in terms of mechanical properties, that is, physical strength characteristics such as tensile elongation, dart impact strength, and tensile modulus.
[Table 2]

| | Resin composition | | | | | Characteristics | | | |
|---|---|---|---|---|---|---|---|---|---|
| | Component (A) | | Component (B) | Component (C) | | Tensile elongation | Dart impact resistance | Tensile modulus | Heat aging resistance |
| | (A-1) (parts by weight) | (A-2) (parts by weight) | (parts by weight) | Polymer | Parts by weight | (%) | (Kg. Cm) | ($Kg/cm^2$) | |
| Ex. 1 | 63 | | 37 | 2 | 10 | 180 | 80 | 16400 | ○ |
| Ex. 2 | 63 | | 37 | 3 | 10 | 185 | 81 | 16600 | ○ |
| Ex. 3 | 63 | | 37 | 5 | 10 | 190 | 83 | 16200 | ○ |
| Ex. 4 | 63 | | 37 | 6 | 10 | 190 | 85 | 16200 | ○ |
| Ex. 5 | 63 | | 37 | 8 | 10 | 195 | 82 | 16100 | ○ |
| Ex. 6 | 63 | | 37 | 10 | 10 | 130 | 65 | 16700 | ○ |
| Ex. 7 | 63 | | 37 | 6 | 7 | 170 | 75 | 16900 | ○ |
| Ex. 8 | 63 | | 37 | 6 | 15 | 200 | 88 | 15700 | ○ |
| Ex. 9 | 31.5 | 31.5 | 37 | 6 | 10 | 190 | 87 | 16400 | ○ |
| Ex. 10 | 63 | | 37 | 13 | 10 | 180 | 84 | 16100 | ○ |
| Com. Ex. 1 | 63 | | 37 | - | 0 | 5 | 7 | 17500 | × |
| Com. Ex. 2 | 63 | | 37 | 1 | 10 | 35 | 27 | 13900 | × |
| Com. Ex. 3 | 63 | | 37 | 4 | 10 | 40 | 35 | 13700 | × |
| Com. Ex. 4 | 63 | | 37 | 7 | 10 | 35 | 33 | 13700 | × |
| Com. Ex. 5 | 63 | | 37 | 9 | 10 | 105 | 48 | 13400 | Δ |
| Com. Ex. 6 | 63 | | 37 | 11 | 10 | 70 | 40 | 13600 | × |
| Com. Ex. 7 | 63 | | 37 | 12 | 10 | 95 | 46 | 14200 | Δ |
| Com. Ex. 8 | 63 | | 37 | 14 | 10 | 98 | 49 | 14100 | ○ |
| Com. Ex. 9 | 63 | | 37 | 15 | 10 | 100 | 48 | 15500 | ○ |

Industrial Applicability

According to the present invention, by adding a specific partially hydrogenated block copolymer to a styrene resinic and/or a polyphenylene ether resin, and a polyolefinic resin, a thermoplastic resin composition and a molded article thereof were obtained, having excellent physical characteristics such as a tensile elongation property, a dart impact strength property, and tensile modulus, as well as good heat aging resistance and excellent workability.

## Claims

**1.** A thermoplastic resin composition comprising:

(A) 95 to 5 parts by weight of a styrenic resin and/or a polyphenylene ether resin;
(B) 5 to 95 parts by weight of an olefinic resin; and
(C) 1 to 28 parts by weight of a partially hydrogenated block copolymer based on 100 parts by weight of the total weight of the components (A) and (B), wherein the component (C) comprises at least one polymer block X containing a vinyl aromatic compound as a main component and at least one polymer block Y containing a conjugated diene compound as a main component,

a content of the vinyl aromatic compound in the component (C) is 10 wt% or more and less than 50 wt%,
a vinyl bond content before hydrogenation of the conjugated diene compound in the component (C) is 5 wt% or more but less than 35 wt%,
85 mol% or more of the vinyl bond content in the component (C) is hydrogenated, and
1 mol% or more and less than 35 mol% of double bonds derived from the conjugated diene compound in the component (C) are hydrogenated.

**2.** The thermoplastic resin composition according to Claim 1, wherein 5 mol% or more and less than 35 mol% of the double bonds derived from the conjugated diene compound in the component (C) are hydrogenated.

**3.** The thermoplastic resin composition according to Claim 1 or Claim 2, wherein the component (A) is a styrenic resin.

**4.** The thermoplastic resin composition according to any one of Claims 1 to 3, wherein a weight average molecular weight of the polymer block X containing the vinyl aromatic compound as the main component is 5,000 to 50,000.

**5.** The thermoplastic resin composition according to any one of Claims 1 to 4, wherein a weight average molecular weight of the partially hydrogenated block copolymer of the component (C) is at least 40,000 and at most 200,000.

**6.** A molded article obtained by molding the thermoplastic resin composition according to any one of Claims 1 to 5.

**7.** The molded article according to Claim 6, which is for a food container.

## Patentansprüche

**1.** Thermoplastische Harzzusammensetzung, umfassend:

(A) 95 bis 5 Gew.-Teile eines Styrolharzes und/oder eines Polyethylenetherharzes;
(B) 5 bis 95 Gew.-Teile eines olefinischen Harzes; und
(C) 1 bis 28 Gew.-Teile eines teilweise hydrierten Blockcopolymers, bezogen auf 100 Gew.-Teile des Gesamtgewichts der Komponenten (A) und (B),

wobei die Komponente (C) mindestens einen Polymerblock X umfasst, welcher eine vinylaromatische Verbindung als Hauptkomponente enthält, und mindestens einen Polymerblock Y, welcher eine konjugierte Dienverbindung als Hauptkomponente enthält,
der Gehalt der vinylaromatischen Verbindung in der Komponente (C) 10 Gew.-% oder mehr und weniger als 50 Gew.-% ist,
der Vinylbindungsgehalt vor Hydrierung der konjugierten Dienverbindung in der Komponente (C) 5 Gew.-% oder mehr, aber weniger als 35 Gew.-%, ist,

85 Mol-% oder mehr des Vinylbindungsgehalts in der Komponente (C) hydriert ist, und
1 Mol-% oder mehr und weniger als 35 Mol-% der von der konjugierten Dienverbindung in der Komponente (C) stammenden Doppelbindungen hydriert sind.

2. Thermoplastische Harzzusammensetzung nach Anspruch 1, wobei 5 Mol-% oder mehr und weniger als 35 Mol-% der von der konjugierten Dienverbindung in der Komponente (C) stammenden Doppelbindungen hydriert sind.

3. Thermoplastische Harzzusammensetzung nach Anspruch 1 oder 2, wobei die Komponente (A) ein Styrolharz ist.

4. Thermoplastische Harzzusammensetzung nach einem der Ansprüche 1 bis 3, wobei das Gewichtsmittel des Molekulargewichts des Polymerblocks X, welcher die vinylaromatische Verbindung als Hauptkomponente enthält, 5000 bis 50000 ist.

5. Thermoplastische Harzzusammensetzung nach einem der Ansprüche 1 bis 4, wobei ein Gewichtsmittel des Molekulargewichts des teilweise hydrierten Blockcopolymers der Komponente (C) mindestens 40000 und höchstens 200000 ist.

6. Formgegenstand, erhalten durch Formen der thermoplastischen Harzzusammensetzung nach einem der Ansprüche 1 bis 5.

7. Formgegenstand nach Anspruch 6, wobei dieser für einen Lebensmittelbehälter bestimmt ist.

## Revendications

1. Composition de résine thermoplastique comprenant :

   (A) de 95 à 5 parties en masse d'une résine styrénique et/ou d'une résine de polyphénylène éther ;
   (B) de 5 à 95 parties en masse d'une résine oléfinique ; et
   (C) de 1 à 28 parties en masse d'un copolymère séquencé partiellement hydrogéné rapporté à 100 parties en masse de la masse totale des constituants (A) et (B), dans laquelle le constituant (C) comprend au moins une séquence polymère X contenant un composé aromatique vinylique comme constituant principal et au moins une séquence polymère Y contenant un composé de diène conjugué comme constituant principal,

   une teneur du composé aromatique vinylique dans le constituant (C) est de 10 % en masse ou supérieure et inférieure à 50 % en masse,
   une teneur en liaison vinyle avant l'hydrogénation du composé de diène conjugué dans le constituant (C) est de 5 % en masse ou supérieure mais inférieure à 35 % en masse,
   85 % en mole ou plus de la teneur en liaison vinyle dans le composé (C) sont hydrogénés, et
   1 % en mole ou plus et moins de 35 % en mole de doublets liaisons dérivées du composé de diène conjugué dans le constituant (C) sont hydrogénés.

2. Composition de résine thermoplastique selon la revendication 1, dans laquelle 5 % en mole ou plus et moins de 35 % en mole des doubles liaisons dérivées du composé de diène conjugué dans le constituant (C) sont hydrogénés.

3. Composition de résine thermoplastique selon la revendication 1 ou la revendication 2, dans laquelle le constituant (A) est une résine styrénique.

4. Composition de résine thermoplastique selon l'une quelconque des revendications 1 à 3, dans laquelle une masse moléculaire moyenne en masse de la séquence polymère X contenant le composé aromatique vinylique comme constituant principal est de 5 000 à 50 000.

5. Composition de résine thermoplastique selon l'une quelconque des revendications 1 à 4, dans laquelle une masse moléculaire moyenne en masse du copolymère séquence partiellement hydrogéné du constituant (C) est d'au moins 40 000 et d'au plus 200 000.

6. Article moulé obtenu par moulage de la composition de résine thermoplastique selon l'une quelconque des revendications 1 à 5.

7. Article moulé selon la revendication 6, lequel est destiné à un récipient pour aliments.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 56038338 A
- JP 1174550 A
- JP 9012800 A
- WO 03000788 A
- US 3306874 A
- JP 63152628 A
- JP 428704 A
- JP 436636 A
- JP 63004841 A
- JP 1037970 A
- JP 1053851 A
- JP 2009041 A
- JP 4039495 A
- US 5115035 A
- JP 3619286 B

### Non-patent literature cited in the description

- **I. M. Kolthoff et al.** *J. Polym. Sci.,* 1946, vol. 1, 429